# EUROPEAN PATENT SPECIFICATION

(11) **EP 1 766 251 B1**
(45) Date of publication and mention of the grant of the patent: **28.10.2009**
(21) Application number: 05749249.8
(22) Date of filing: 26.05.2005
(51) Int. Cl.: F16D 13/74

(54) **AUTOMOTIVE OIL-BATH CLUTCH**
ÖLBADKUPPLUNG
EMBRAYAGE A BAIN D'HUILE POUR AUTOMOBILE

(30) Priority: 28.05.2004 IT BO20040342
(43) Date of publication of application: 28.03.2007
(73) Proprietor: FERRARI S.p.A., 41100 Modena (IT)
(72) Inventor: CIMATTI, Franco, 41026 PAVULLO (IT)
(74) Representative: Jorio, Paolo
(86) International application number: PCT/EP2005/052404
(87) International publication number: WO 2005/119078

(56) References cited:
- US-A- 3 474 888
- US-A- 3 768 613
- US-A- 4 085 835
- US-A- 4 321 990
- US-A- 4 474 278

## Description

### TECHNICAL FIELD

The present invention relates to an automotive oil-bath clutch.

More specifically, the present invention relates to an automotive oil-bath clutch of the type comprising at least one disk mounted inside a housing to rotate about a substantially horizontal longitudinal axis.

The housing has a lubricating oil inlet, and normally extends about and beneath the clutch disk to define a tank at the bottom to catch the lubricating oil which falls by force of gravity into the tank.

Documents US3474888, US3768613, and US4474278 relate to an automotive oil-bath clutch comprising one disk mounted inside a housing to rotate about a substantially horizontal longitudinal axis. The housing has a lubricating oil inlet, and extends about the clutch disk.

### BACKGROUND ART

Known oil-bath clutches of the type described above have various drawbacks, mainly on account of the lubricating oil tank at the bottom making them relatively bulky. Moreover, since the clutch disk is immersed continually in the lubricating oil, known oil-bath clutches of the above type also have the further drawback of being relatively inefficient.

### DISCLOSURE OF INVENTION

It is an object of the present invention to provide an automotive oil-bath clutch designed to eliminate the above drawbacks, and which is also cheap and easy to produce.

According to the present invention, there is provided an automotive oil-bath clutch as claimed in Claim 1.

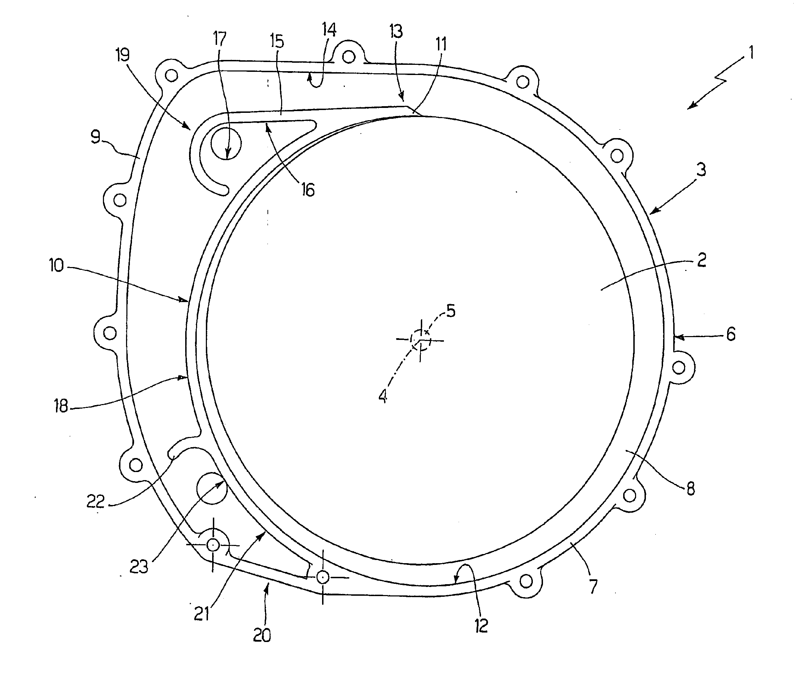

### BRIEF DESCRIPTION OF THE DRAWING

A non-limiting embodiment of the present invention will be described by way of example with reference to the accompanying drawing, which shows a schematic side view with parts removed for clarity.

### BEST MODE FOR CARRYING OUT THE INVENTION

Number 1 in the accompanying drawing indicates as a whole an automotive oil-bath clutch comprising at least one substantially circular disk 2 mounted inside a housing 3 to rotate in a given rotation direction (anticlockwise in the example shown) about a substantially horizontal longitudinal axis 4.

Housing 3 has an axial inlet 5 for feeding lubricating oil into housing 3, and is bounded by a lateral wall 6 comprising a first portion 7 extending substantially 360° about axis 4 to define a chamber 8 housing disk 2; and a second portion 9 extending approximately but no more than 180° about portion 7 to define, together with portion 7, an outlet channel 10 for the lubricating oil from chamber 8. Wall 6 is also designed to separate chamber 8 from channel 10 by means of a blade-like edge 11 substantially parallel to axis 4.

Portion 7 defines, together with disk 2, a feed channel 12 for feeding lubricating oil about axis 4. Channel 12 is connected to an inlet end 13 of channel 10, and increases in radial width in the rotation direction of disk 2.

Channel 10 comprises a substantially straight first portion 14 extending from end 13, substantially tangent to disk 2, and bounded laterally on one side by portion 9, and on the other side by a substantially hook-shaped plate 15, which projects from portion 7, is positioned with its concavity facing downwards, and defines, with portion 7, a top chamber 16 for collecting the gaseous phase of the lubricating oil.

Chamber 16 has an outlet hole 17, for the gaseous phase of the lubricating oil from housing 3, substantially parallel to axis 4 and shielded by plate 15 to prevent the liquid phase of the lubricating oil from reaching hole 17.

Channel 10 also comprises a second portion 18, which extends downwards about axis 4 from a first end 19 connected to portion 14, decreases in radial width in the rotation direction of disk 2, and terminates at a second end 20 shaped to define a bottom tank 21 for collecting the liquid phase of the lubricating oil.

Tank 21 is bounded at the top by a plate 22 projecting inside portion 18 to prevent backflow of the liquid phase of the lubricating oil along portion 18, and has an outlet hole 23, for the liquid phase of the lubricating oil from housing 3, substantially parallel to axis 4.

In actual use, lubricating oil is fed into chamber 8 through inlet 5, and is fed along feed channel 12 by rotation of disk 2, whose movement comprises a centrifugal component to press the lubricating oil against wall 6, and a tangential component for feeding the lubricating oil along feed channel 12 in the rotation direction of disk 2.

Once the lubricating oil comes to the end of feed channel 12 and first portion 14 of outlet channel 10, the gaseous phase of the lubricating oil is collected inside top chamber 16 and exhausted from housing 3 through outlet hole 17, and the liquid phase of the lubricating oil is collected inside bottom tank 21 and drained from housing 3 through outlet hole 23.

Clutch 1 therefore requires no lubricating oil tank beneath disk 2, and is therefore relatively compact.

## Claims

1. An automotive oil-bath clutch comprising at least one disk (2) mounted to rotate in a given rotation direction about a longitudinal axis (4); and a housing (3) for housing the disk (2); the housing (3) comprising a chamber (8), which houses the disk (2), is bounded by a lateral wall (6) facing the disk (2) and extending about the disk (2), and has a lubricating oil inlet (5); **characterized in that** the distance between the disk (2) and the lateral wall (6) continuously increases in the rotation direction of disk (2) about said axis (4) over 360°.

2. A clutch as claimed in Claim 1, wherein the housing (3) also comprises an outlet channel (10) for the lubricating oil from said chamber (8); the channel (10) comprising at least a substantially straight first portion (14) tangent to the disk (2).

3. A clutch as claimed in Claim 2, wherein said first portion (14) is substantially horizontal; the channel (10) comprising a second portion (18) substantially extending about said axis (4) and extending downwards from a first end (19) connected to said first portion (14).

4. A clutch as claimed in Claim 3, wherein the lubricating oil comprises a liquid phase and a gaseous phase; the channel (10) comprising, at said first end (19), a first outlet (17) for said gaseous phase from the housing (3).

5. A clutch as claimed in Claim 4, wherein the channel (10) also comprises first shielding means (15) to prevent said liquid phase from reaching said first outlet (17).

6. A clutch as claimed in any one of Claims 3 to 5, wherein the second portion (18) extends between said first end (19) and a second end (20), which is shaped to define a bottom tank (21) for collecting said liquid phase.

7. A clutch as claimed in Claim 6, wherein the bottom tank (21) has a second outlet (23) for said liquid phase from the housing (3).

8. A clutch as claimed in Claim 6 or 7, wherein the channel (10) also comprises second shielding means (22) to prevent backflow of said liquid phase from the bottom tank (21) and along said second portion (18).

9. A clutch as claimed in any one of Claims 3 to 8, wherein the second portion (18) extends between said first end (19) and a second end (20), and substantially decreases in radial width from the first to the second end (19, 20).

## Patentansprüche

1. Ölbadkupplung für ein Kraftfahrzeug, wobei die Kupplung aufweist:
mindestens eine Scheibe (2), die derart montiert ist, dass sie sich in eine vorgegebene Richtung um eine Längsachse (4) dreht; und
ein Gehäuse (3) zum Aufnehmen der Scheibe (2), wobei das Gehäuse (3) eine Kammer (8) aufweist, die die Scheibe (2) aufnimmt und durch eine der Scheibe (2) zugewandte und sich um die Scheibe (2) erstreckende Seitenwand (6) begrenzt ist und einen Schmieröleinlass (5) aufweist;
**dadurch gekennzeichnet, dass**
der Abstand zwischen der Scheibe (2) und der Seitenwand (6) in der Drehrichtung der Scheibe (2) um die Achse (4) über 360° kontinuierlich zunimmt.

2. Kupplung nach Anspruch 1, wobei das Gehäuse (3) ferner einen Auslasskanal (10) für das Schmieröl von der Kammer (8) aufweist, wobei der Kanal (10) mindestens einen im Wesentlichen geraden ersten Abschnitt (14) aufweist, der sich tangential zur Scheibe (2) erstreckt.

3. Kupplung nach Anspruch 2, wobei der erste Abschnitt (14) sich im Wesentlichen horizontal erstreckt, und wobei der Kanal (10) einen zweiten Abschnitt (18) aufweist, der sich im Wesentlichen um die Achse (4) erstreckt und von einem mit dem ersten Abschnitt (14) verbundenen ersten Ende (19) nach unten erstreckt.

4. Kupplung nach Anspruch 3, wobei das Schmieröl eine flüssige Phase und eine gasförmige Phase aufweist, und wobei der Kanal (10) am ersten Ende (19) einen ersten Auslass (17) für die gasförmige Phase vom Gehäuse (3) aufweist.

5. Kupplung nach Anspruch 4, wobei der Kanal (10) ferner eine erste Abschirmeinrichtung (15) aufweist, die verhindert, dass die flüssige Phase den ersten Auslass (17) erreicht.

6. Kupplung nach einem der Ansprüche 3 bis 5, wobei der zweite Abschnitt (18) sich zwischen dem ersten Ende (19) und einem zweiten Ende (20) erstreckt, das derart geformt ist, dass ein unterer Behälter (21) zum Sammeln der flüssigen Phase definiert wird.

7. Kupplung nach Anspruch 6, wobei der untere Behälter (21) einen zweiten Auslass (23) für die flüssige Phase vom Gehäuse (3) aufweist.

8. Kupplung nach Anspruch 6 oder 7, wobei der Kanal (10) ferner eine zweite Abschirmeinrichtung (22) aufweist, die einen Rückfluss der flüssigen Phase vom unteren Behälter (21) entlang des zweiten Abschnitts (18) verhindert.

9. Kupplung nach einem der Ansprüche 3 bis 8, wobei der zweite Abschnitt (18) sich zwischen dem ersten Ende (19) und dem zweiten Ende (20) erstreckt, wobei die radiale Breite des zweiten Abschnitts vom ersten zum zweiten Ende (19, 20) wesentlich abnimmt.

## Revendications

1. Embrayage à bain d'huile pour automobile, comprenant au moins un disque (2) monté de façon à tourner dans une direction de rotation donnée autour d'un axe longitudinal (4) ; et un boîtier (3) pour renfermer le disque (2) ; le boîtier (3) comprenant une chambre (8), qui renferme le disque (2), qui est délimitée par une paroi latérale (6) faisant face au disque (2) et s'étendant autour du disque (2), et qui comporte un orifice d'entrée d'huile de lubrification (5) ; **caractérisé en ce que** la distance entre le disque (2) et la paroi latérale (6) augmente de façon continue dans la direction de rotation du disque (2) autour dudit axe sur 360°.

2. Embrayage selon la revendication 1, dans lequel le boîtier (3) comprend également un canal de sortie (10) pour l'huile de lubrification venant de ladite chambre (8) ; le canal (10) comprenant au moins une première partie sensiblement droite (14) tangente au disque (2).

3. Embrayage selon la revendication 2, dans lequel ladite première partie (14) est sensiblement horizontale ; le canal (10) comprenant une deuxième partie (18) s'étendant sensiblement autour dudit axe (4) et s'étendant vers le bas à partir d'une première extrémité (19) reliée à ladite première partie (14).

4. Embrayage selon la revendication 3, dans lequel l'huile de lubrification comprend une phase liquide et une phase gazeuse ; le canal (10) comprenant, à ladite première extrémité (19), un premier orifice de sortie (17) pour ladite phase gazeuse venant du boîtier (3).

5. Embrayage selon la revendication 4, dans lequel le canal (10) comprend également des premiers moyens de blindage (15) pour empêcher ladite phase liquide d'atteindre ledit premier orifice de sortie (17).

6. Embrayage selon l'une quelconque des revendications 3 à 5, dans lequel la deuxième partie (18) s'étend entre ladite première extrémité (19) et une deuxième extrémité (20), qui est conformée de façon à définir un réservoir inférieur (21) pour recueillir ladite phase liquide.

7. Embrayage selon la revendication 6, dans lequel le réservoir inférieur (21) comporte un deuxième orifice de sortie (23) pour ladite phase liquide venant du boîtier (3).

8. Embrayage selon la revendication 6 ou 7, dans lequel le canal (10) comprend également des deuxièmes moyens de blindage (22) afin d'empêcher un écoulement de refoulement de ladite phase liquide à partir du réservoir inférieur (21) et le long de ladite deuxième partie (18).

9. Embrayage selon l'une quelconque des revendications 3 à 8, dans lequel la deuxième partie (18) s'étend entre ladite première extrémité (19) et une deuxième extrémité (20), et diminue sensiblement de largeur radiale de la première à la deuxième extrémités (19, 20).
